(19) Europäisches Patentamt European Patent Office Office européen des brevets

(11) **EP 3 294 987 B1**

(12) **EUROPEAN PATENT SPECIFICATION**

(45) Date of publication and mention
of the grant of the patent:
**22.02.2023   Bulletin 2023/08**

(21) Application number: **16793425.6**

(22) Date of filing: **11.05.2016**

(51) International Patent Classification (IPC):
*E21B 47/00* *(2006.01)*       *G01V 1/00* *(2006.01)*
*G01V 1/40* *(2006.01)*       *E21B 47/12* *(2006.01)*

(52) Cooperative Patent Classification (CPC):
**G01V 1/40;** G01V 2200/12

(86) International application number:
**PCT/US2016/031805**

(87) International publication number:
**WO 2016/183168 (17.11.2016 Gazette 2016/46)**

(54) **TIME CORRECTIONS FOR DRILLING DATA**

ZEITKORREKTUREN FÜR BOHRDATEN

CORRECTIONS DE TEMPS POUR DONNÉES DE FORAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.05.2015   US 201562160871 P**

(43) Date of publication of application:
**21.03.2018   Bulletin 2018/12**

(73) Proprietor: **ConocoPhillips Company
Houston, Texas 77079 (US)**

(72) Inventors:
• **CHIU, Stephen K.
Katy, Texas 77450 (US)**
• **ANNO, Phil D.
Eureka Springs, Arkansas 72632 (US)**

(74) Representative: **Simpson, Paul Christopher et al
ConocoPhillips (U.K.) Limited
20th Floor
Angel Court
London EC2R 7HJ (GB)**

(56) References cited:
WO-A1-2008/070754       WO-A1-2014/035732
WO-A1-2015/042103       US-A1- 2004 010 374
US-A1- 2006 180 349       US-A1- 2006 180 349
US-A1- 2007 239 753       US-A1- 2008 049 550
US-A1- 2008 137 474       US-A1- 2012 201 096

• DRISCOLL ET AL.: '33. DECONVOLVING
WATER-GUN SEISMIC DATA.' PROCEEDINGS
OF THE OCEAN DRILLING PROGRAM,
SCIENTIFIC RESULTS., [Online] vol. 121, 1991,
XP055329061 Retrieved from the Internet:
<URL:http://www-odp.tamu.edu/publications/1
21_sr/VOLUME/CHAPTERS/sr121_33.pdf>

## Description

FIELD OF THE INVENTION

The present invention relates generally to acquisition of signals associated with drilling wells for hydrocarbons. More particularly, but not by way of limitation, embodiments of the present invention include adjusting acquired signals received during drilling operation so that all signals are synchronous in time relative to a common reference time.

BACKGROUND OF THE INVENTION

Hydrocarbon reservoirs are developed with drilling operations using a drill bit associated with a drill string rotated from the surface or using a downhole motor, or both using a downhole motor and also rotating the string from the surface. A bottom hole assembly (BHA) at the end of the drill string may include components such as drill collars, stabilizers, drilling motors and logging tools, and measuring tools. A BHA is also capable of telemetering various drilling and geological parameters to the surface facilities.

Resistance encountered by the drill string in a wellbore during drilling causes significant wear on drill string, especially often the drill bit and the BHA. Understanding how the geometry of the wellbore affects resistance on the drill string and the BHA and managing the dynamic conditions that lead potentially to failure of downhole equipment is important for enhancing efficiency and minimizing costs for drilling wells. Various conditions referred to as drilling dysfunctions that may lead to component failure include excessive torque, shocks, bit bounce, induced vibrations, bit whirl, stick-slip, among others. These conditions must be rapidly detected so that mitigation efforts are undertaken as quickly as possible, since some dysfunctions can quickly lead to tool failures.

Downhole drilling dysfunctions can cause serious operational problems that are difficult to detect or predict. The more rapidly and efficiently drilling dysfunctions are identified the more quickly they may be mitigated. Thus a need exists for efficient methods, systems and apparatuses to quickly identify and to mitigate dysfunctions during drilling operations. Rapid aggregation and analysis of data from multiple sources associated with well bore drilling operations facilitates efficient drilling operations by timely responses to drilling dysfunctions.

Accurate timing information for borehole or drill string time-series data acquired with down hole sensors are important for aggregating information from surface and down hole sensors. However, each sensor may have its own internal clock or data from many sensors may be acquired and recorded relative to multiple clocks that are not synchronized. This non-synchronization of the timing information creates problems when combining and processing data from various sensors. Additionally, sensor timing is known sometimes to be affected by various environmental factors that cause variable timing drift that may differentially impact various sensors. Many factors may render inaccurate the timing of individual sensors that then needs to be corrected or adjusted so the data may be assimilated correctly with all sensor information temporally consistent in order to accurately inform a drilling operations center about the dynamic state of the well being drilled.

Therefore, there is a need for improved methods, systems and apparatuses for the accurate adjustment of timing for sensors in downhole environments.

WO2008/070754 A1 describes adjusting the time reference of time series data from a wellbore sensor and includes determining a linear moveout time correction and applying it. US2006/180349 A1 describes cross correlating time series data with a reference time series. WO2015/042103 A1 describes dynamic time warp method of time data correction.

BRIEF SUMMARY OF THE DISCLOSURE

It should be understood that, although an illustrative implementation of one or more embodiments are provided below, the various specific embodiments may be implemented using any number of techniques known by persons of ordinary skill in the art. The disclosure should in no way be limited to the illustrative embodiments, drawings, and/or techniques illustrated below, including the exemplary designs and implementations illustrated and described herein.

The invention more particularly includes a process in accordance with the appended claims.

BRIEF DESCRIPTION OF THE DRAWINGS

A more complete understanding of the present invention and benefits thereof may be acquired by referring to the follow description taken in conjunction with the accompanying drawings, which do not necessarily show all steps of the invention but are nevertheless useful in understanding the invention:

> Fig. 1 illustrates an example of a subterranean formation with a wellbore according to various embodiments of the present disclosure;
> Fig. 2 illustrates an example of a time series before and after time correction of the data, with a surface clock as the reference;
> Fig. 3 illustrates an example before and after clock-drift correction of downhole data to a surface reference clock by the dynamic time warping method;
> Fig. 4 illustrates an example before and after linear moveout correction of data acquired from downhole transducers;
> Fig. 5 illustrates a method for automatically adjusting time series data relative to a reference time;
> Fig. 6 illustrates a method for automatically adjusting time series data relative to a reference time;
Fig. 7 illustrates a method for automatically adjusting time series data relative to a reference time; and
Fig. 8 illustrates a system or apparatus for implementing the method of the invention.

DETAILED DESCRIPTION

Turning now to the detailed description of the preferred arrangement or arrangements of the present invention, it should be understood that the inventive features and concepts may be manifested in other arrangements and that the scope of the invention is not limited to the embodiments described or illustrated. The scope of the invention is intended only to be limited by the scope of the claims that follow.

The following examples of certain embodiments of the invention are given. Each example is provided by way of explanation of the invention, one of many embodiments of the invention, and the following examples should not be read to limit, or define, the scope of the invention.

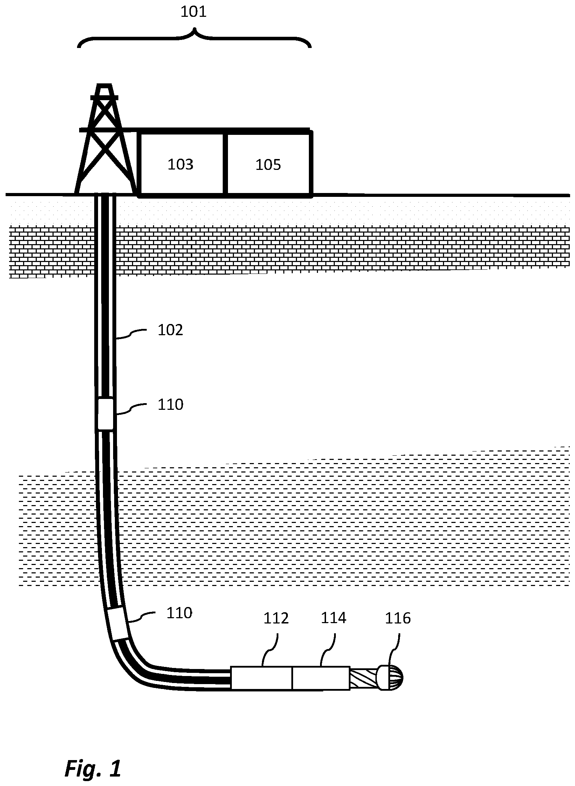

Fig. 1 illustrates an example of a subterranean formation with a wellbore according to various embodiments of the present disclosure. The various embodiments disclosed herein are used in the well drilling environment as illustrated in Fig. 1 wherein a well bore 102 is drilled from surface drilling rig facilities 101 comprising a drilling rig, drill string associated sensors, 103, for example an electronic acoustic receiver attached on the kelly and associated control and supporting facilities, 105, which may include data aggregation and data processing infrastructure as well as drill rig control facilities. During drilling operations the well bore 102 includes a drill string comprising a bottom hole assembly (BHA) that may include a mud motor 112, an adjustable bent housing or 'BHA Dynamic Sub' 114 containing various sensors and electronic components and a drill bit 116. The BHA Dynamic Sub acquires time series data such as RPM, torque, bending moment, tension, pressure (ECS) and vibration data. Additionally, it acquires MWD/LWD data in high fidelity or standard modes, such as inclination, azimuth, gamma ray, resistivity and other advanced LWD data. Any data acquired with the BHA may be transmitted to the drilling rig 101 through drill string telemetry or through mud-pulse telemetry as time series data.

The drill string may also contain associated sensors, for example mid-string dynamic subs 110 that acquire high fidelity data such as RPM, torque, bending moment, tension and vibration data, and these instrumented subs can send signals representing these measurements up the drill string where they are recorded on or near the drilling rig. In addition, the drill string in a well bore 102 may be associated with a surface based sensor 103 for acquiring time series data associated with the drill string, which may be high frequency or low-frequency data, such as RPM, torque, weight-on-bit (WOB), acceleration data, etc.

Low-frequency surface data, such as RPM, torque, and acceleration data, are routinely used to detect and mitigate drilling dysfunctions. Recent developments in recording high-frequency surface as well as downhole data adds a new dimension of big data to better understand drilling dysfunctions. Complex Event Processing (CEP) is becoming possible through data acquisition and processing capabilities that are now being developed. Real time analytics are possible when tool motion and dysfunction indices are analyzed during drilling operations using signal processing, vibration analysis, CEP and feedback loops to rig controls. This leads to efficient acquisition of downhole tool wear indices through monitoring and prediction, which allows for optimized utilization and preventive maintenance on all parts of the string. This also allows for an effectively continuous understanding of downhole conditions, resulting in an efficiently constructed wellbore that is optimized for completions.

The continuous real time acquisition of multiple data streams of conventional and brand new data types allows for new analytic measures for each direct time series as well as the combinations of these data together as rapidly and efficiently as possible. How these measurements change over time and how each measurement data stream changes relative to other data streams provides new analytic tools for the understanding of the drill string dynamics and wellbore conditions.

Proper merging of data is integral to understanding CEP and creating rules or learnings applicable to dynamic drilling operations and responding appropriately in real time. This merging, comparison and analysis of data is impaired, and valuable operational analysis time may be lost, when different data types are not synchronized to the same reference time.

The drilling industry has a need to optimize downhole data acquisition operations that properly synchronize or correct timing differences between various time series measurements. Considerable efforts in manual operations are used in the field to synchronize or adjust time differences between surface and downhole sensors. However, these manual time-adjustment operations are not just slow, they are known to open up potential human errors during the field data acquisition phase.

For example, each sensor may have its own internal clock. In an ideal world, the field operation is able to synchronize the clocks of all surface and downhole sensors simultaneously to ensure that each clock starts at the same time and/or all time differences are known. However, in practice, the synchronization is not done during field operations. A surface sensor often does not synchronize or cannot be synchronized with downhole sensors, or the clocks of downhole sensors start at different time. This non-synchronization of the clocks creates time misalignment between surface and downhole measurements. This timing error may range from minutes to hours.

Another major source of timing error relates to clock drift of each sensor where a sensor associated clock or timer does not run at the same speed compared to another clock. That is, after some time the clock "drifts apart" in time from the other clock. The timing of various sensors may drift relative to other timing devices for any number of reasons, including physical composition, temperature, pressure, power variations and timer quality. Timing drift may vary at different rates arbitrarily. The timing error of the clock drift may range from seconds to minutes.

To correct the timing error due to the non-synchronization of the clocks, the drilling industry often employs a manual method to correlate downhole data to surface data, assuming surface data to be a reference signal because surface data are always available, usually convenient to use and synchronize with a main clock, therefore it is often most convenient to use a surface associated clock as a reference signal. However, the manual method is labor-intensive, error prone, and less accurate depending on a person's judgment and preferences. Since the clock drift is difficult to determine manually, the drilling industry frequently ignores or approximates this correction.

To avoid the manual corrections of timing errors, embodiments disclosed herein provide automatic methods of one or several steps to correct time misalignments among surface and downhole data. After the corrections, all the measurements are represented correctly relative to a reference clock, and therefore all measurements are substantially synchronized in time. Substantially synchronized in time will be understood to mean within one or two standard deviations of the measurement error. This facilitates easy and accurate comparisons among all sensors and data sets. The application of time adjustments consists of three key corrections: 1) correcting for the non-synchronization of the clocks based on cross-correlation method, 2) correcting for clock drift based on a dynamic time warping method, and 3) travel-time path correction between surface and downhole sensors based on a "linear moveout correction." The benefits of this multistep application give accurate corrections of timing errors and drastically speed up the processing time, which avoids labor-intensive and error-prone methods currently employed in the drilling industry. After the corrections, all the measurements are represented correctly relative to a reference clock.

The following outlines the framework for automatic corrections of timing errors needed to compensate downhole data. There are numerous time-shift methods that can be applied to compute the time corrections. For example, it may be preferable to initially use a time-shift method based on cross-correlation. In signal processing, cross-correlation is a measure of similarity of two waveforms as a function of a time-lag that gives a measure of time adjustment that may be applied to one of them. For discrete real time series of f(t) and g(t), the cross-correlation is defined as (Oppenheim and Schafer, 1989; Telford, et al. 1976):

$$C(\tau) = \sum_{n=0}^{N} f(n\Delta t) * g(n\Delta t + \tau)$$

, where $C(\tau)$ denotes the cross-correlation function, $\tau$ is the displacement of g(t) relative to f(t), termed as the time lag, $\Delta t$ is the time sample rate, and n is a time sample index.

In some embodiments, the data segment utilizes a time interval to drill at least 2 stands of drill pipe. Each drill pipe is approximately 27.432 m (90 feet). It typically takes 3 to 5 hours to complete drilling 2 stands of drill pipe. Where there is a new addition of a drill pipe, the values of the time series normally reduce to zero, creating a step function. The cross-correlation of the time series that include those step functions gives an accurate and robust estimation of the time correction.

For example, f(t) may correspond to surface data and g(t) represents downhole data. A time shift is found by the maximum of the cross-correlating function of C($\tau$). The time shift is applied to all data to correct for non-synchronization of all clocks with the reference clock (typically a surface clock). As an example, the data length ($N\Delta t$) taken into the cross-correlation process may be about 3 to 5 hours at a time, but of course varies by the situation. This process is repeated until the end of the data set.

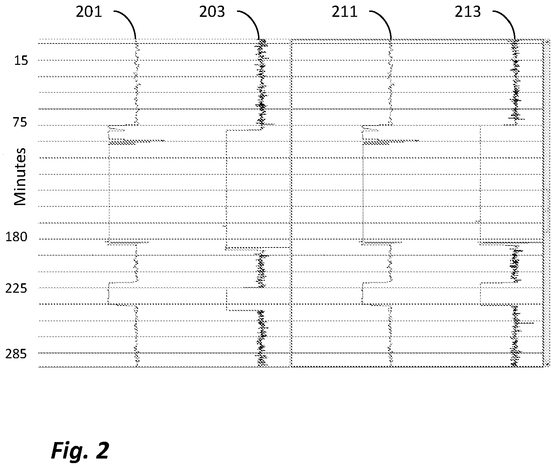

**Fig. 2** shows an example of time-series data before and after time correction of the data, with a surface clock as the reference. Time series **201** is transducer data representing Surface measured Revolutions per Minute (RPM) associated with a surface reference clock. Time series **203** is transducer data obtained from a sensor in the wellbore, associated with the drill string, also measuring RPM. An addition of a drill pipe occurs around 75 minutes showing an illustrated example of a step function. After applying cross-correlation as described, a time shift is obtained to be applied to adjust the time of the wellbore sensor RPM data to the surface time series associated reference time. Time series **211** is the same transducer RPM time series data **201** associated with a surface reference clock and time series **213** is the wellbore sensor RPM data after the time adjustment determined from cross-correlation has been applied.

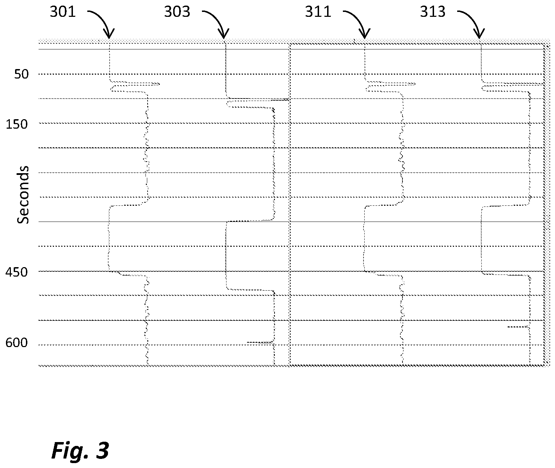

The dynamic time warping method (Hale, 2013) of correcting clock-drift computes a sample-by-sample time shift. This method can give excellent matches between surface and downhole measurements. **Fig. 3** illustrates an example before and after clock-drift correction of downhole data to a surface reference clock by the dynamic time warping method. Time series **301** is transducer data representing a Surface measured RPM associated with a surface reference clock. Time series **303** is transducer data obtained from a sensor in the wellbore, associated with the drill string, also measuring RPM. After applying the dynamic time warping as described, a time shift series of adjustments is obtained to be applied to adjust the time of the wellbore sensor RPM data. Time series **311** is the same transducer RPM time series data **301** associated with a surface reference clock and time series **313** is the wellbore sensor RPM data after the time adjustment determined from cross-correlation has been applied.

Another time adjustment may be added because downhole-sensor locations vary in depth. For sensors associated with a drilling string, the linear moveout correction accounts for travel time in which the signal travels from one sensor location in depth to the next sensor and/or to the surface. The correction $\Delta T$ is computed as: $\Delta T = Z / V$, where Z is the distance from the downhole sensor location to surface, and V is the velocity of signal propagation, which may be the velocity of the steel pipe or the velocity of a signal through a conductor of wired pipe. The $\Delta T$ correction is dynamic and changes as the depth of the sensor increases.

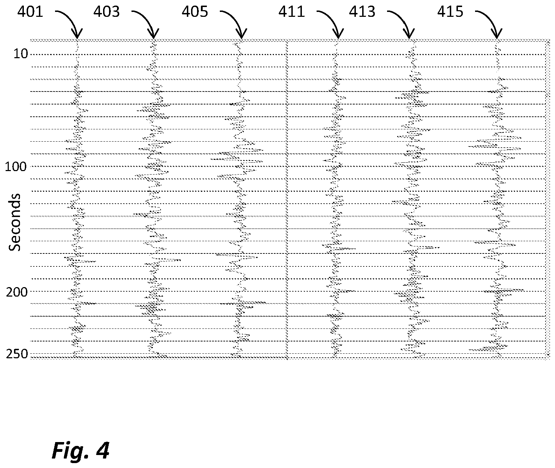

**Fig. 4** illustrates an example before and after linear moveout correction of data acquired from downhole transducers, in this case accelerometers. Time series **401, 403** and **405** are downhole acceleration time series data acquired from sensors in the wellbore, for example in or on the drill string. After application of the linear moveout time adjustment correction described, time series data **411, 413** and **415** are illustrated such that the data are substantially closer to synchronous in time relative to, for example, a surface associated reference time. Other time adjustments may be added after this linear moveout correction, such as the cross-correlation or time warp methods.

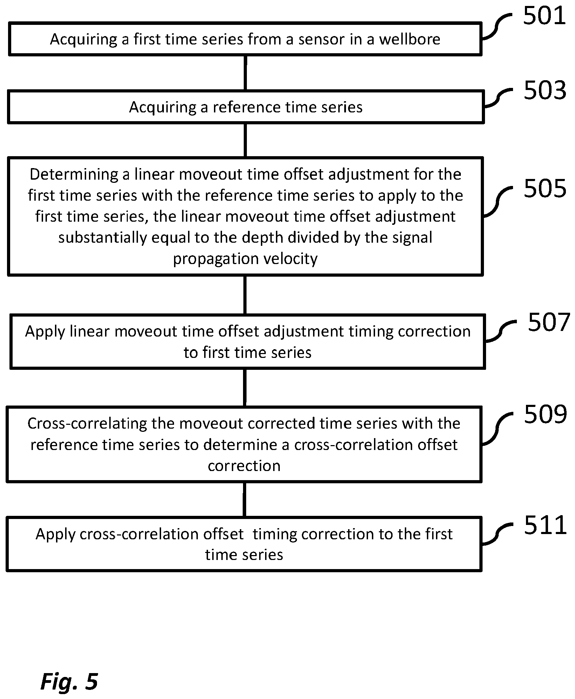

**Fig. 5** illustrates a method according to embodiments of the present disclosure for automatically adjusting time series data relative to a reference time. A first time series is acquired from a downhole sensor **501.** A reference time series is acquired, which may be acquired using a surface transducer related time series with a known relationship to a reference time **503.** A linear moveout time series is determined to adjust the first time series due to the downhole sensors being variable in depth. The linear moveout time offset adjustment is equal to the depth of the downhole sensor divided by the signal propagation velocity **505.** Then the linear moveout offset correction may be applied to the first time series **507.** The first time series and the reference time series may be cross-correlated to determine a cross-correlation time offset correction to apply to the first time series **509,** and the cross-correlation time offset correction is applied **511** to obtain a cross-correlation corrected time series.

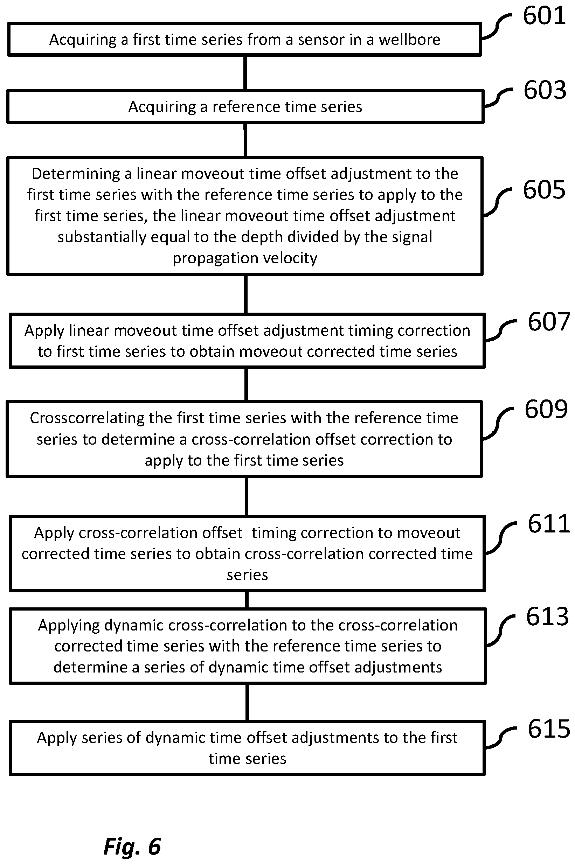

**Fig. 6** illustrates a method according to alternative embodiments of the present disclosure for automatically adjusting time series data relative to a reference time. A first time series is acquired from a downhole sensor **601.** A reference time series is acquired, which may be acquired using a surface transducer related time series with a known relationship to a reference time **603.** A linear moveout time series offset adjustment is determined to adjust the first time series due to the downhole sensors being variable in depth. The linear moveout time offset adjustment is equal to the depth of the downhole sensor divided by the signal propagation velocity or drill string **605.** The linear moveout time offset adjustment is applied to the first time series to obtain a moveout corrected time series **607.** The first time series and the reference time series are cross-correlated to determine a cross-correlation time correction to apply to the first time series **609.** The cross-correlation time correction is applied to the first time series **611,** to obtain a cross correlation corrected time series. In Figure 6, to correct for clock-sensor drift, a dynamic cross-correlation is shown being applied to the first time series with the reference time series to obtain dynamic cross-correlation time offset adjustments to apply to the first time series **613.** This technique is not in accordance with the invention. According to the inventiona dynamic time warping process is used to determine adjustments to the data for clock drift. The dynamic cross-correlation time offset adjustments would be applied to the cross-correlation corrected time series to obtain dynamically adjusted time series **615.** According to the invention, dynamic time warp adjustments were determined, and they are applied to the first time series.

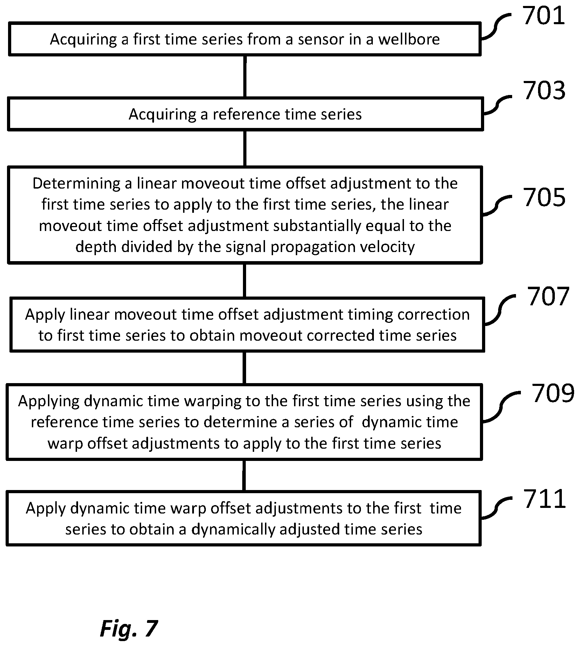

**Fig. 7** illustrates a method according to further embodiments of the present disclosure for automatically adjusting time series data relative to a reference time. A first time series is acquired from a sensor in a wellbore **701.** A reference time series is acquired, which may be acquired using a surface transducer related time series with a known relationship to a reference time **703.** A linear moveout time series offset adjustment is determined to adjust the first time series due to the downhole sensors being variable in depth. The linear moveout time offset adjustment is equal to the depth of the downhole sensor divided by the signal propagation velocity or drill string **705.** The linear moveout time offset adjustment is applied to the first time series to obtain a moveout corrected time series **707.** A dynamic time warping is applied to the first time series with respect to the reference time series to determine a series of dynamic time warp offset adjustments to apply to the first time series **709.** The series of dynamic time warp offset adjustments are then applied to the first time series to obtain a dynamically adjusted time series **711.**

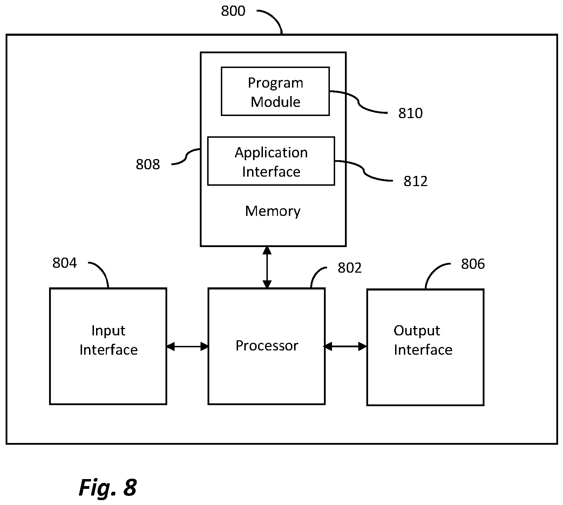

**Fig. 8** is a schematic diagram of an embodiment of a system **800** that may correspond to or may be part of a computer and/or any other computing device, such as a workstation, server, mainframe, super computer, processing graph and/or database. The system **800** includes a processor **802,** which may be also be referenced as a central processor unit (CPU). The processor **802** may communicate and/or provide instructions to other components within the system **800,** such as the input interface **804,** output interface **806,** and/or memory **808.** In one embodiment, the processor **802** may include one or more multi-core processors and/or memory (e.g., cache memory) that function as buffers and/or storage for data. In alternative embodiments, processor **802** may be part of one or more other processing components, such as application specific integrated circuits (ASICs), field-programmable gate arrays (FPGAs), and/or digital signal processors (DSPs). Although **Fig. 8** illustrates that processor **802** may be a single processor, it will be understood that processor **802** is not so limited and instead may represent a plurality of processors including massively parallel implementations and processing graphs comprising mathematical operators connected by data streams. The processor **802** may be configured to implement any of the methods described herein.

**Fig. 8** illustrates that memory **808** may be operatively coupled to processor **802**. Memory **808** may be a non-transitory medium configured to store various types of data. For example, memory **808** may include one or more memory devices that comprise secondary storage, read-only memory (ROM), and/or random-access memory (RAM). The secondary storage is typically comprised of one or more disk drives, optical drives, solid-state drives (SSDs), and/or tape drives and is used for non-volatile storage of data. In certain instances, the secondary storage may be used to store overflow data if the allocated RAM is not large enough to hold all working data. The secondary storage may also be used to store programs that are loaded into the RAM when such programs are selected for execution. The ROM is used to store instructions and perhaps data that are read during program execution. The ROM is a non-volatile memory device that typically has a small memory capacity relative to the larger memory capacity of the secondary storage. The RAM is used to store volatile data and perhaps to store instructions.

As shown in **Fig. 8,** the memory **808** may be used to house the instructions for carrying out various embodiments described herein. In an embodiment, the memory **808** may comprise a computer program module **810** that may be accessed and implemented by processor **802**. Alternatively, application interface **812** may be stored and accessed within memory by processor **802**. Specifically, the program module or application interface may perform signal processing and/or conditioning of the time series data as described herein.

Programming and/or loading executable instructions onto memory **808** and processor **802** in order to transform the system **800** into a particular machine or apparatus that operates on time series data is well known in the art. Implementing instructions, real-time monitoring, and other functions by loading executable software into a computer can be converted to a hardware implementation by well-known design rules. For example, decisions between implementing a concept in software versus hardware may depend on a number of design choices that include stability of the design and numbers of units to be produced and issues involved in translating from the software domain to the hardware domain. Often a design may be developed and tested in a software form and subsequently transformed, by well-known design rules, to an equivalent hardware implementation in an ASIC or application specific hardware that hardwires the instructions of the software. In the same manner as a machine controlled by a new ASIC is a particular machine or apparatus, likewise a computer that has been programmed and/or loaded with executable instructions may be viewed as a particular machine or apparatus.

In addition, **Fig. 8** illustrates that the processor **802** may be operatively coupled to an input interface **804** configured to obtain the time series data and output interface **806** configured to output and/or display the results or pass the results to other processing. The input interface **804** may be configured to obtain the time series data via sensors, cables, connectors, and/or communication protocols. In one embodiment, the input interface **804** may be a network interface that comprises a plurality of ports configured to receive and/or transmit time series data via a network. In particular, the network may transmit the acquired time series data via wired links, wireless link, and/or logical links. Other examples of the input interface **804** may be universal serial bus (USB) interfaces, CD-ROMs, DVD-ROMs. The output interface **806** may include, but is not limited to one or more connections for a graphic display (e.g., monitors) and/or a printing device that produces hard-copies of the generated results.

In one nonlimiting embodiment a process for adjusting the time reference of time series data acquired from a wellbore sensor relative to a reference time series comprises acquiring a first time series from a sensor in a wellbore, acquiring a reference time series and determining a linear moveout time correction to apply to the first time series. The linear moveout time correction is equal to the depth of the wellbore sensor divided by the signal propagation velocity or drill string. The linear moveout correction is applied to the first time series. The first time series is cross-correlated with the reference time series to determine a cross-correlation time correction to apply to the first time series and the cross-correlation time correction is applied to the first time series to obtain a cross-correlation corrected time series.

A dynamic time warp series of time corrections is determined with reference to the reference time series. The dynamic time warp series of time corrections is applied to the first time series. A crosscorrelation may be applied to the reference time series with first time series during a period of drilling that includes new drill pipe added to the drill string. This results in a robust estimate of the time difference between the time series.

Although the systems and processes described herein have been described in detail, it should be understood that various changes and alterations can be made without departing from the scope of the invention as defined by the following claims.

**Claims**

1. A process for adjusting the time reference of time series data acquired from a wellbore sensor relative to a reference time series where the process comprises:

a. acquiring a first time series from a sensor (114) in a wellbore (102);

b. acquiring a reference time series;

c. determining a linear moveout time correction to apply to the first time series, the linear moveout time correction equal to the depth of the wellbore sensor divided by the signal propagation velocity;

d. applying the linear moveout correction to the first time series; **characterised by**

e. cross-correlating the first-time series with the reference time series to determine a cross-correlation time correction to apply to the first-time series;

f. applying the cross-correlation time correction to the first time series to obtain a cross-correlation corrected time series; and

g. further **characterised by** determining a dynamic time warp series of time correction to apply to the first time series with the reference time series and correcting for clock-drift based on a dynamic time warping method.

**2.** The process of claim 1 wherein the cross-correlation is applied to the reference time series with the first-time series during a period of drilling that includes a new addition of drill pipe.

**Patentansprüche**

**1.** Prozess zum Einstellen der Zeitreferenz von Zeitreihendaten, die von einem Bohrlochsensor in Bezug auf eine Referenzzeitreihe erhoben werden, wobei der Prozess Folgendes umfasst:

a. Erheben einer ersten Zeitreihe von einem Sensor (114) in einem Bohrloch (102);

b. Erheben einer Referenzzeitreihe;

c. Bestimmen einer linearen Herausbewegungszeitkorrektur, die auf die erste Zeitreihe angewandt werden soll, wobei die lineare Herausbewegungszeitkorrektur gleich der Tiefe des Bohrlochsensors geteilt durch die Signalausbreitungsgeschwindigkeit ist;

d. Anwenden der linearen Herausbewegungskorrektur auf die erste Zeitreihe; **gekennzeichnet durch**

e. Kreuzkorrelieren der ersten Zeitreihe mit der Referenzzeitreihe, um eine Kreuzkorrelationszeitkorrektur zu bestimmen, die auf die erste Zeitreihe angewandt werden soll;

f. Anwenden der Kreuzkorrelationszeitkorrektur auf die erste Zeitreihe, um eine kreuzkorrelationskorrigierte Zeitreihe zu erhalten; und

g. weiter **gekennzeichnet durch** Bestimmen einer dynamischen Zeitkorrektur-Zeitverzerrungsreihe, die auf die erste Zeitreihe mit der Referenzzeitreihe angewandt werden soll, und Korrigieren der Taktdrift basierend auf einem dynamischen Zeitverzerrungsverfahren.

**2.** Prozess nach Anspruch 1, wobei die Kreuzkorrelation auf die Referenzzeitreihe mit der ersten Zeitreihe während einer Bohrperiode, die eine neue Hinzufügung von Bohrgestänge beinhaltet, angewandt wird.

**Revendications**

**1.** Processus pour ajuster la référence temporelle de données de série temporelle acquises à partir d'un capteur de puits de forage par rapport à une série temporelle de référence où le processus comprend les étapes consistant à :

a. acquérir une première série temporelle à partir d'un capteur (114) dans un puits de forage (102) ;

b. acquérir une série temporelle de référence ;

c. déterminer une correction temporelle de déplacement linéaire à appliquer à la première série temporelle, la correction temporelle de déplacement linéaire étant égale à la profondeur du capteur de puits de forage divisée par la vélocité de propagation de signal ;

d. appliquer la correction de déplacement linéaire à la première série temporelle ; **caractérisé par** les étapes consistant à

e. effectuer une corrélation croisée de la première série temporelle avec la série temporelle de référence pour déterminer une correction temporelle par corrélation croisée à appliquer à la première série temporelle ;

f. appliquer la correction temporelle par corrélation croisée à la première série temporelle pour obtenir une série temporelle corrigée par corrélation croisée ; et

g. en outre **caractérisé par** l'étape consistant à déterminer une correction de série temporelle à déformation temporelle dynamique à appliquer à la première série temporelle avec la série temporelle de référence et à corriger une dérive d'horloge sur la base d'un procédé de déformation temporelle dynamique.

**2.** Processus selon la revendication 1, dans lequel la corrélation croisée est appliquée à la série temporelle de référence avec la première série temporelle durant une période de forage qui inclut une nouvelle addition de tige de forage.

*Fig. 1*

*Fig. 2*

*Fig. 3*

*Fig. 4*

| Acquiring a first time series from a sensor in a wellbore | 501 |

| Acquiring a reference time series | 503 |

| Determining a linear moveout time offset adjustment for the first time series with the reference time series to apply to the first time series, the linear moveout time offset adjustment substantially equal to the depth divided by the signal propagation velocity | 505 |

| Apply linear moveout time offset adjustment timing correction to first time series | 507 |

| Cross-correlating the moveout corrected time series with the reference time series to determine a cross-correlation offset correction | 509 |

| Apply cross-correlation offset timing correction to the first time series | 511 |

**Fig. 5**

Acquiring a first time series from a sensor in a wellbore $\qquad$ 601

Acquiring a reference time series $\qquad$ 603

Determining a linear moveout time offset adjustment to the first time series with the reference time series to apply to the first time series, the linear moveout time offset adjustment substantially equal to the depth divided by the signal propagation velocity $\qquad$ 605

Apply linear moveout time offset adjustment timing correction to first time series to obtain moveout corrected time series $\qquad$ 607

Crosscorrelating the first time series with the reference time series to determine a cross-correlation offset correction to apply to the first time series $\qquad$ 609

Apply cross-correlation offset timing correction to moveout corrected time series to obtain cross-correlation corrected time series $\qquad$ 611

Applying dynamic cross-correlation to the cross-correlation corrected time series with the reference time series to determine a series of dynamic time offset adjustments $\qquad$ 613

Apply series of dynamic time offset adjustments to the first time series $\qquad$ 615

*Fig. 6*

Acquiring a first time series from a sensor in a wellbore — 701

Acquiring a reference time series — 703

Determining a linear moveout time offset adjustment to the first time series to apply to the first time series, the linear moveout time offset adjustment substantially equal to the depth divided by the signal propagation velocity — 705

Apply linear moveout time offset adjustment timing correction to first time series to obtain moveout corrected time series — 707

Applying dynamic time warping to the first time series using the reference time series to determine a series of dynamic time warp offset adjustments to apply to the first time series — 709

Apply dynamic time warp offset adjustments to the first time series to obtain a dynamically adjusted time series — 711

*Fig. 7*

800

Program
Module — 810

808 — Application
Interface — 812

Memory

804

Input
Interface ⟷ 802 Processor ⟷ 806 Output
Interface

**Fig. 8**

**EP 3 294 987 B1**

**REFERENCES CITED IN THE DESCRIPTION**

**Patent documents cited in the description**

- WO 2008070754 A1
- US 2006180349 A1
- WO 2015042103 A1